# EUROPÄISCHE PATENTSCHRIFT

(11) **EP 0 356 873 B1**
(45) Veröffentlichungstag und Bekanntmachung des Hinweises auf die Patenterteilung: **27.10.1993**
(21) Anmeldenummer: 89115427.0
(22) Anmeldetag: 22.08.1989
(51) Int. Cl.: G06F 13/42

(54) **Serielle Datenschnittstelle**
Serial data interface
Interface de données sériel

(30) Priorität: 31.08.1988 DE 3829454
(43) Veröffentlichungstag der Anmeldung: 07.03.1990
(73) Patentinhaber: Deutsche Thomson-Brandt GmbH, 78003 Villingen-Schwenningen (DE)
(72) Erfinder: Gleim, Günter, Dipl.-Ing., D-7730 Villingen (DE)

(56) Entgegenhaltungen:
- DE-A- 3 404 721

## Beschreibung

Die Erfindung betrifft eine serielle Datenschnittstelle nach dem Oberbegriff des Anspruchs 1.

Eine serielle Datenschnittstelle dient dazu, Peripherieschaltungen, die Daten über einen Datenbus empfangen oder senden, übertragungstechnisch mit dem Datenbus verbinden. Eine Datenübertragung mit einem birektionalen Datenbus ist in der DE-OS 34 04 721 beschrieben. Zur Realisierung möglichst kurze Übertragungszeiten der Daten über den Datenbus werden die Datenworte nur so lang gewählt, wie es für den zu übertragenden Datenumfang erforderlich ist. Die serielle Datenschnittstelle muß den über den Datenbus fließenden Datenstrom nach Merkmalen auswerten, die die Zuordnung zur angeschlossenen Peripherieschaltung erkennen lassen.

Der Erfindung liegt die Aufgabe zugrunde, eine serielle Datenschnittstelle so aufzubauen, daß die für die angeschlossene Peripherieschaltung zutreffende Länge der Datenworte sowie eine im Datenwort gegebenenfalls enthaltene Adressierung der Peripherieschaltung schnell und präzise erkannt werden kann und die für die Peripherieschaltung bestimmten Datenworte umgehend an diese übermittelt werden können.

Diese Aufgabe wird bei einer seriellen Datenschnittstelle nach dem Oberbegriff des Anspruchs 1 durch die im kennzeichnenden Teil angegebenen Merkmale gelöst.

Die serielle Datenschnittstelle nach der Erfindung eignet sich besonders zur Verbindung einer Peripherieschaltung mit einem Datenbus, der den Thomson Spezifikationen entspricht. Hierbei wird einmal die Länge der Datenworte für die Zuorndung ausgenutzt. Reicht dieses Kriterium nicht aus, da mehrere Peripherieschaltungen Datenworte gleicher Länge erhalten, kann zusätzlich eine in das Datenwort eingefügte Adresse ausgewertet werden.

Die Auswertung der Datenworte erfolgt während eines Lesezyklus. Dieser Lesezyklus ist durch einen bestimmten logischen Zustand der Freigabeleitung vorgegeben. Die Anzahl der während des Lesezykluses über eine Taktleitung übertragenen Taktpulse entspricht der Länge des Datenwortes. Bei jedem Takt wird ein Bit der auf der Datenleitung anstehenden Daten in einen Datenspeicher eingeschrieben. Mittels einer am Ausgang des Datenspeichers angeordneten Vergleichsschaltung wird die Länge des Datenwortes überprüft. Bei Abweichungen der Länge des Datenwortes von der für die Peripherieschaltung vorgesehenen Länge unterdrückt eine nachgeschaltete Steuerschaltung die Übergabe der gespeicherten Daten zur Peripherieschaltung. Bei korrekter Länge des Datenwortes wird entweder ein Übergabebefehl erzeugt oder, falls Datenworte der ermittelten Länge mehrdeutig zuordnerbar sind, noch eine Prüfung der im Datenwort enthaltenen Adressbits durchgeführt. Bei zutreffender Adresse wird ein Übergabebefehl erzeugt, der eine Übertragung der im Datenspeicher zwischengespeicherten Daten an die Peripherieschaltung veranlaßt. Anderenfalls wird die Übergabe unterdrückt.

Durch gemeinsame Auswertung des Zustandes der Freigabeleitung und der Taktpulse auf der Taktleitung wird zu Beginn einer Datenübertragung der Datenspeicher, die Vergleichsschaltung und die Steuerschaltung in einen definierten Wartezustand gesetzt, von dem aus immer wieder eine vollständige neue Prüfung der übertragenen Datenworte möglich ist. Durch Umschalten der Freigabeleitung in einen Schreibzustand kann die serielle Schnittstelle zur Ausgabe von Daten auf den Datenbus umgeschaltet werden, wobei hier gleichzeitig eine Voreinstellung auf eine bestimmte Länge der auf den Datenbus zugebenden Daten möglich ist.

Weiterbildungen und vorteilhafte Ausgestaltungen der Erfindung ergeben sich aus den Ansprüchen, der weiteren Beschreibung und der Zeichnung, die ein Ausführungsbeispiel der Erfindung zeigt.

Im einzelnen zeigt die Zeichnung in
- Fig. 1: das Blockschaltbild einer seriellen Datenschnitt stelle nach der Erfindung,
- Fig. 2: die Gesamtschaltung einer seriellen Datenschnittstelle für eine Datenwortlänge von 24 Bit,
- Fig. 3: als Ausschnitt aus Fig. 2 eine Setz-/Rücksetz schaltung mit einem Taktgenerator,
- Fig. 4: ein Signaldiagramm der in Fig. 3 dargestellten Schaltung,
- Fig. 5: als Ausschnitt aus Fig. 2 einen Datenspeicher,
- Fig. 6: als Ausschnitt aus Fig. 2 eine Vergleichsschaltung,
- Fig. 7: ein Zeitdiagramm der in Fig. 6 dargestellten Schaltung,
- Fig. 8: als Ausschnitt aus Fig. 2 eine Steuerschaltung,
- Fig. 9: ein Zeitdiagramm der in Fig. 8 dargestellten Steuerschaltung und
- Fig. 10: ein Flußdiagramm der in Fig. 8 dargestellten Schaltung.

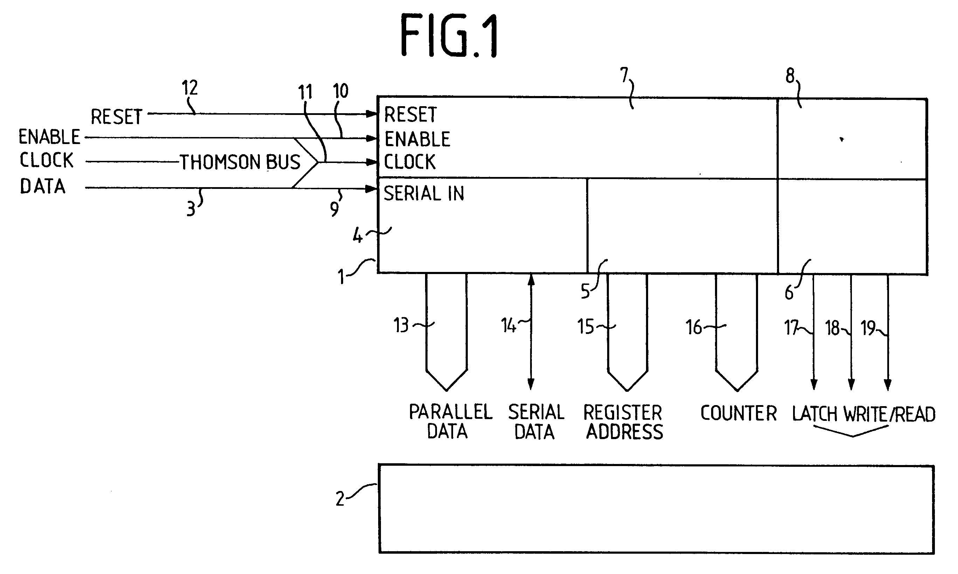

Fig. 1 zeigt ein Blockschaltbild der seriellen Datenschnittstelle 1. Diese stellt eine Verbindung zwischen einer Peripherieschaltung 2 und einem Datenbus 3 her. Die serielle Datenschnittstelle 1 umfaßt einen Datenspeicher 4, eine Vergleichsschaltung 5, eine Steuerschaltung 6, eine Setz-/Rücksetzschaltung 7 und einen internen Taktgenerator 8. Der Datenbus 3 umfaßt drei Leitungen, eine Datenleitung 9, eine Freigabeleitung 10 und eine Taktleitung 11. Außerdem ist eine Rücksetzleitung 12 vorgesehen.

Zur Verbindung mit der Peripherieschaltung dient ein paralleler Datenausgang 13, ein serieller Datenein- und -ausgang 14, ein Adressausgang 15, ein Zählerausgang 16 und Steuerausgänge 17 - 19.

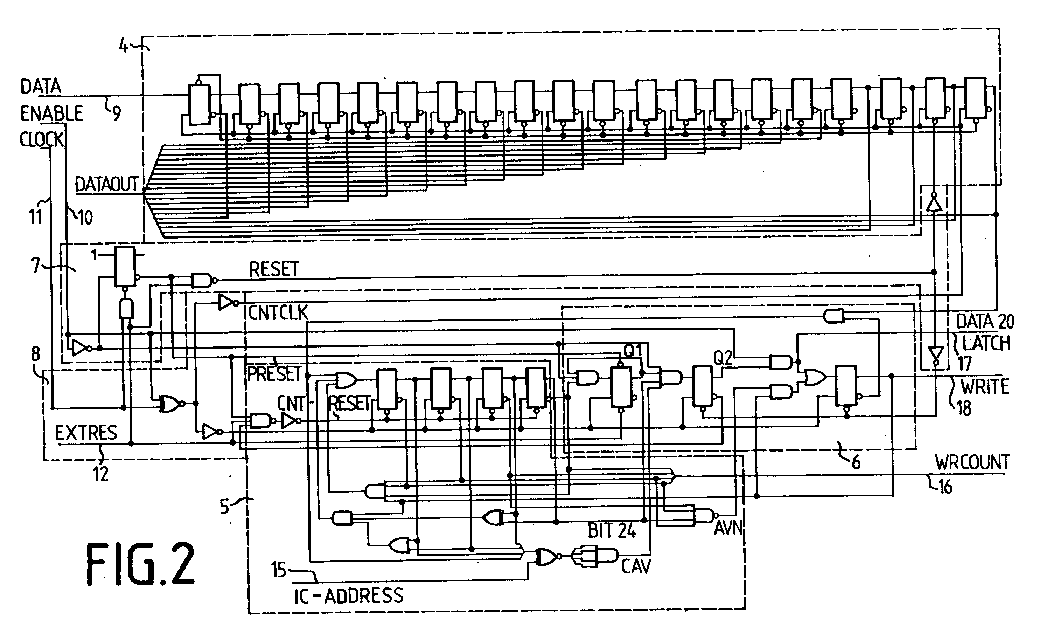

Die vollständige Schaltung der seriellen Datenschnittstelle 1 geht aus Fig. 2 hervor. Dabei sind die Schaltungsbestandteile, welche den in Fig. 1 dargestellten Blöcken zuordnerbar sind, mit einer gestrichelten Rahmung versehen und tragen die gleichen Bezugsziffern. Auch die in Fig. 1 bereits dargestellten Leitungen und Ausgänge sind mit den gleichen Bezugsziffern versehen.

In der in Fig. 2 dargestellten Schaltung ist ein Eingang des Datenspeichers 4 mit der Datenleitung 9 verbunden. Am Ausgang des Datenspeichers 4 ist die Vergleichsschaltung 5 angeordnet und dieser ist wiederum die Steuerschaltung 6 nachgeschaltet. Eingänge der internen Setz-/Rücksetzschaltung 7 sind mit der Freigabeleitung 10 und der Taktleitung 11 verbunden. Ausgänge der internen Setz-/Rücksetzschaltung 7 führen zu Setz- und Rücksetzeingängen des Datenspeichers 4, der Vergleichsschaltung 5 und der Steuerschaltung 6. Eingänge des Taktgenerators 8 sind mit der Freigabeleitung 10 und der Taktleitung 11 verbunden und Ausgänge des Taktgenerators 8 führen zu Takteingängen des Datenspeichers 4, der Vergleichsschaltung 5 und der Steuerschaltung 6. Zur Erläuterung der einzelnen Baugruppen und der Gesamtfunktion der seriellen Datenschnittstelle wird auf die folgenden Figuren Bezug genommen.

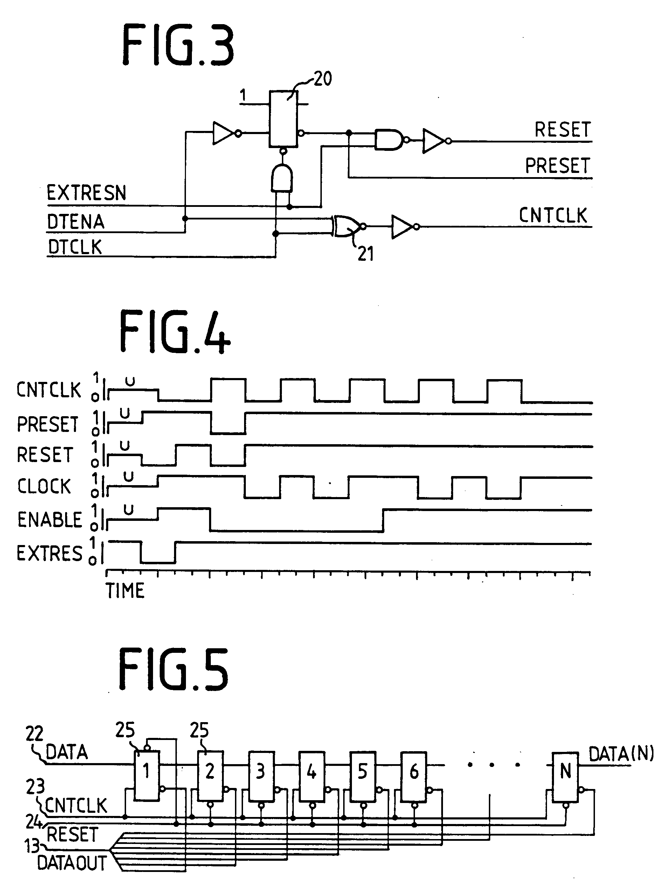

Fig. 3 zeigt die Setz-/Rücksetzschaltung 7 und den internen Taktgenerator 8. Wie aus dem Zeitdiagramm aus Fig. 4 hervorgeht, erfolgt zunächst durch ein externes Rücksetzsignal EXTRES eine Umschaltung eines Flip-Flops 20 der Setz-/Rücksetzschaltung 7 in einen definierten Zustand. Darauffolgende Setz- und Rücksetzbefehle PRESET, RESET an die weiteren Schaltungsbestandteile der seriellen Datenschnittstelle werden durch Kombination der Freigabesignale ENABLE und Taktsignale CLOCK erzeugt. Wie das Zeitdiagramm erkennen läßt, wird bei den Setz- und Rücksetzsignalen PRESET, RESET ein Zustandswechsel während eines ersten Taktes erzeugt. Bei den nachfolgenden Takten verändern sich die Zustände nicht mehr. Auch beim Schreibzyklus, der durch Umschalten des Zustandes des Freigabesignals ENABLE eingenommen wird, erfolgt keine erneute Änderung des Setz- und Rücksetzsignals. Der Taktgenerator 8 erzeugt in Verbindung mit dem an der Freigabeleitung anstehenden Signal ENABLE und dem an der Taktleitung anstehenden Taktsignal CLOCK einen internen Takt CNTCLK. Dies geschieht durch Verknüpfung der beiden Signale ENABLE, CLOCK über eine logische EX-OR-Verknüpfung mittels des Gatters 21. Dabei wird der interne Takt CNTCLK im Schreibzyklus gegenüber dem Lesezyklus invertiert.

In Fig. 5 ist der Datenspeicher 4 dargestellt. Dieser ist als Schieberegister mit Speicherzellen 25 aufgebaut, wobei die Anzahl n der Speicherzellen 25 der Anzahl der Bits im Datenwort entspricht, welche der Peripherieschaltung 2 zugeordnet sind. Das gesamte Datenwort kann entweder ausschließlich aus diesen Datenbits bestehen oder, falls auch Adressbits erforderlich sind, aus den Datenbits und den Adressbits. Die Datenleitung 9, welche mit DATA bezeichnete Signale führt, ist an einen seriellen Eingang 22 des Datenspeichers angeschlossen und die Daten DATAOUT sind an einem parallelen Datenausgang 13 abgreifbar. Über einen Takteingang 23 werden Taktsignale CNTCLK zugeführt, wobei durch jeden Takt ein am Dateneingang 22 anstehendes Bit um eine Speicherzelle 25 weitergeschaltet wird. Über einen Setz-/Rücksetzeingang 24 sind Setz-/Rücksignale RESET zuführbar, mit der die einzelnen Speicherzellen 25 in einen definierten Ausgangszustand gebracht werden können. Dabei wird der Ausgang der ersten Speicherzelle 25 auf den Zustand logisch 1 und der der restlichen Speicherzellen 25 auf den Zustand logisch 0 geschaltet.

Sobald ein Datenstrom in den Datenspeicher 4 eingeschrieben wird, wandert das durch Setzten der ersten Speicherzelle 25 gebildete Bit als führendes Bit vor den übrigen Bits des Datenwortes durch den Datenspeicher 4 hindurch. Dieses führende Bit erscheint bei richtiger oder zu großer Länge des Datenwortes später als erstes Bit in der Vergleichsschaltung 5 und läßt sich als BIT 24 dazu auswerten, ob das Datenwort die richtige Länge für die Zuordnung zur Peripherieschaltung 2 besitzt. Bei der Ausgabe der Daten dient das Schiebergister des Datenspeichers 4 auch zur Umsetzung des seriell eingeschriebenen Datenwortes in ein parallel ausgelesenes Datenwort. Im Schreibzyklus, also bei der Ausgabe der Daten von Peripherieschaltung 2 zum Datenbus 3 werden die Daten seriell ausgelesen.

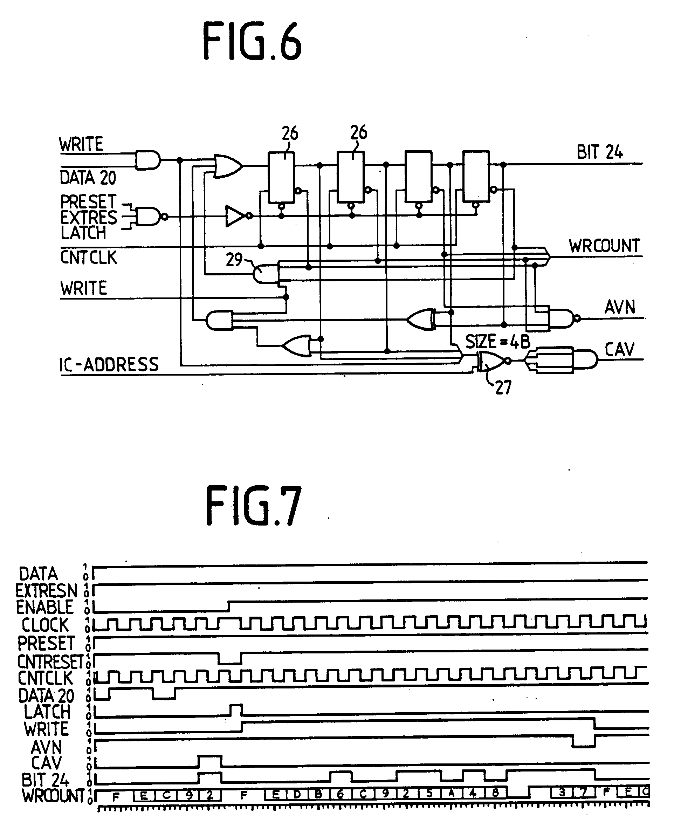

In Fig. 6 ist die Vergleichsschaltung 5 dargestellt. Die Vergleichsschaltung umfaßt ein Schieberegister aus Speicherzellen 26, in die die in den Datenspeicher 4 eingeschriebenen Daten als Data (N) übertragen werden. Enthält das Datenwort keine Bits für eine Adressenzuordnung zu einer Schaltung der Peripherieschaltung 2, so würde eine einzige Speicherzelle 26 des Schieberegisters ausreichen, um das in der ersten Speicherzelle 25 des Datenspeichers 4 gesetzte Bit zu prüfen. Sind dagegen weitere Adressbits vorhanden, so werden entsprechend der Anzahl m der Adressbits m weitere Speicherzellen 26 benötigt. Werden, wie im Ausführungsbeispiel vorgesehen, vier Adressbits den Datenbits der Datenworte vorangestellt, so sind also drei weitere Speicherzellen 26 im Schieberegister der Vergleichsschaltung 5 erforderlich.

In Fig. 7 ist ein Zeitdiagramm der Vergleichsschaltung 5 dargestellt. Anhand dieses Diagramms kann man erkennen, daß zu Beginn eines Lesezyklus, bei dem Daten vom Datenbus 3 in den Datenspeicher 4 eingeschrieben werden und von dort als DATA (N) in die Vergleichsschaltung gelangen, der Zustand des Freigabesignals ENABLE auf logisch 0 liegt. Es wird davon ausgegangen, daß bei einer Datenwortlänge von 24 Bit, für die die Schaltung ausgelegt ist, ein Datenwort gleicher Länge über den Datenbus 3 übertragen wird. In dem Diagramm sind die letzten der 24 Takte dargestellt, durch die dieses Datenwort in die Speicherzellen 26 der Vergleichsschaltung 5 eingeschrieben wird. Mit dem vierundzwanzigsten Takt CNTCLK erscheint am Ausgang der letzten Speicherzelle 26 das führende vorangestellte Bit als BIT 24, während die drei davor angeordneten Speicherzellen 26 die Adressbits enthalten. Mittels einer Vergleichslogik 27 wird nun die Übereinstimmung zwischen der Datenwortadresse und der Adresse der Peripherieschaltung 2 geprüft. Dazu wird an Eingänge der Vergleichslogik 27 über die Ausgänge der Speicherzellen 26 die Datenwortadresse und über Ausgänge der die Adresse der Peripherieschaltung 2 vorgebenden Bausteine deren Adresse als IC-ADRESSE angelegt. Zum gleichen Zeitpunkt, an dem das führende Bit als BIT 24 am Ausgang der letzten Speicherzelle 26 erscheint, gibt der Ausgang der Vergleichslogik 27 bei Übereinstimmung ein Erkennungssignal CAV ab.

Die dargestellte Schaltung besitzt für den Schreibzyklus noch eine weitere Funktion, in die es durch Änderung des logischen Zustandes des Freigabesignals ENABLE umgeschaltet wird. Durch ein von der Steuerschaltung 6 kommendes Übergabesignal LATCH wird die Schaltung zurückgesetzt, gleichzeitig sperrt ein von der Steuerschaltung 6 kommendes Signal WRITE den Datenfluß vom Datenspeicher 4 und schaltet des aus den Speicherzellen 26 gebildete Schieberegister als Zähler um. Bei Erreichen eine bestimmten Zählerstandes wird dann ein Signal AVN zur Steuerschaltung 6 übertragen. Im Zeitdiagramm gemäß Fig. 7 ist dieser Zustand nach Umschalten in den Schreibzyklus und dem Eintreffen von Takten aus einer Gesamtzahl von 16 Takten dargestellt.

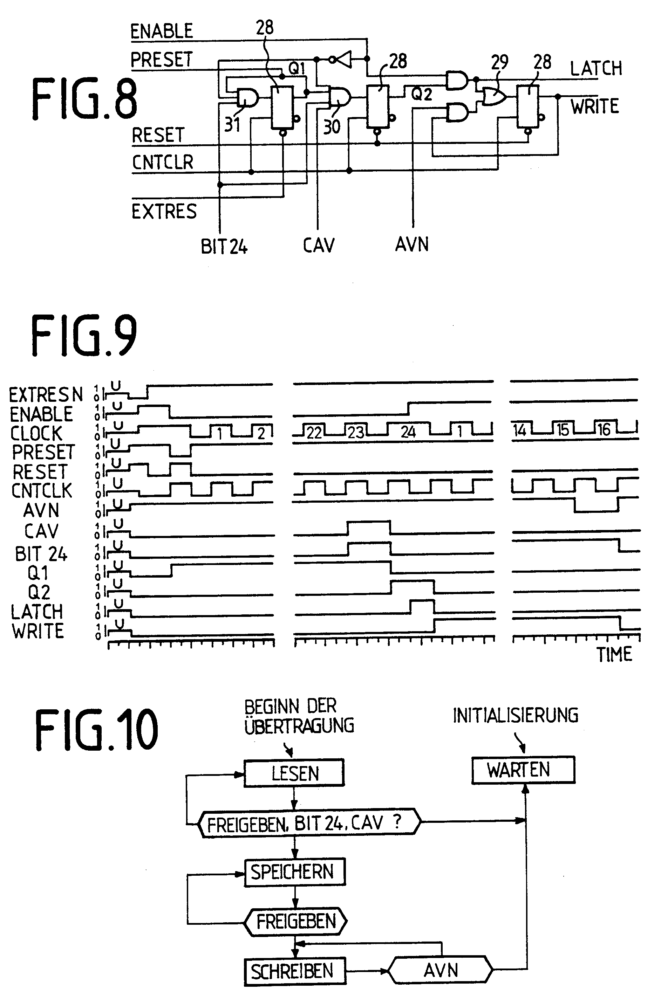

In Fig. 8 ist die Steuerschaltung 6 dargestellt. Auch die Steuerschaltung 6 umfaßt mehrere Speicherzellen 28, die ein Schieberegister bilden, wobei die Speicherzellen 28 über logische Verknüpfungsglieder 29, 30, 31 verbunden sind. Durch ein internes Setzsignal PRESET wird die erste Speicherzelle 28 in den Zustand logisch 1 gesetzt. Für den Fall, daß die Anzahl der Bits im Datenwort nicht der vorgegebenen Länge entspricht, also das Freigabesignal ENABLE vor oder nach dem führenden Bit seinen Zustand in logisch 1 ändert, erfolgt keine Weitergabe den Ausgangszustandes Q1 der ersten Speicherzelle 28 auf die zweite Speicherzelle 28. Stimmt dagegen die Anzahl der Bits überein, so hängt es noch von dem Zustand des CAV-Signals ab, ob das logische Verknüpfungsglied 30 die Übernahme des Zustandes der ersten Speicherzelle 28 auf die zweite Speicherzelle 28 ermöglicht. Im Zustand logisch 1 des CAV-Signals ist dies der Fall, so daß, wie aus Fig. 9 hervorgeht, der Ausgang Q2 auf logisch 1 geht und nach Änderung des Freigabesignals ENABLE von logisch 0 auf logisch 1 das Übergabesignal LATCH ausgegeben wird. Dieses dient unter anderem zur Übergabe der im Datenspeicher 4 gespeicherten Daten in die Peripherieschaltung 2. Außerdem wird bei Vorliegen dieses Zustandes die dritte Speicherzelle 28 durch einen weiteren Takt gesetzt und am Ausgang dieser Speicherzelle 28 erscheint ein Signal WRITE. Dieses versetzt, wie bereits in Verbindung mit Fig. 6 und 7 erläutert, die Vergleichsschaltung 5 in eine Zählbetriebsart. Nach Beendigung des Schreibzyklus, der als AVN-Signal durch die als Zähler arbeitende Vergleichsschaltung 5 geliefert wird, kehrt die Steuerschaltung 6 in einen Wartezustand zurück. Der Schreibzyklus kann auch vorher abgebrochen werden, wenn der Zustand des Freigabesignals ENABLE geändert wird und die Schaltung in einen Lesezyklus umgeschaltet wird. In diesem Fall werden auch die Speicherzellen 28 der Steuerschaltung 6 wieder in den eingangs erwähnten definierten Ausgangszustand zurückgesetzt.

Die beschriebenen Vorgänge bei der Steuerschaltung 6 sind zusätzlich als Flußdiagramm in Fig. 10 dargestellt.

## Patentansprüche

1. Serielle Datenschnittstelle (1) zur Verbindung eines bekannten Datenbusses (3) mit einer Peripherieschaltung (2), wobei eine Vielzahl von Peripherieschaltungen an eine entsprechende Vielzahl von Datenschnittstellen angeschlossen ist und der Datenbus eine Datenleitung (9), eine Freigabeleitung (10) und eine Taktleitung (11) umfaßt, **gekennzeichnet durch**:
- einen an die Datenleitung angeschlossenen Datenspeicher (4) zum sukzessiven Speichern von auf der Datenlei-tung übermittelten Datenworten gleicher oder verschiedener Wortlänge;
- eine an den Datenspeicher angeschlossene Vergleichsschaltung (5), die eventuell in den Datenworten vorhandene Adressen für Peripherieschaltungen ermittelt und mit der Adresse der jeweils angeschlossenen Peripherieschaltung vergleicht;
- eine an die Vergleichsschaltung angeschlossene Steuerschaltung (6), die die Wortlänge der Datenworte mit einer vorgegebenen Wortlänge vergleicht und unter Berücksichtigung der auf der Freigabeleitung übermittelten Signale nur dann eine Weitergabe der Datenworte an die angeschlossene Peripherieschaltung erlaubt, wenn die beiden Wortlängen übereinstimmen;
- einen an die Freigabeleitung und an die Taktleitung angeschlossenen internen Taktgenerator (8), der den Datenspeicher (4), die Vergleichsschaltung (5) und die Steuerschaltung (6) mit Taktsignalen versorgt;
- eine an die Freigabeleitung und an die Taktleitung angeschlossene interne Setz-/Rücksetzschaltung (7), deren Ausgänge mit Setz- und/oder Rücksetzeingängen des Datenspeichers (4), der Vergleichsschaltung (5) und der Steuerschaltung (6) verbunden sind und die auf diese Ausgänge entsprechende Setz- und/oder Rücksetzbefehle gibt, die entweder von einem externen Rücksetzsignal oder mittels einer Kombination aus auf der Freigabeleitung und auf der Taktleitung übermittelten Signalen erzeugt sind.

2. Datenschnittstelle nach Anspruch 1, **dadurch gekennzeichnet**, daß der Datenspeicher (4) ein Schieberegister mit n Speicherzellen (25) umfaßt, wobei die Zahl n der Anzahl der Bits der der Peripherieschaltung (2) zugeordneten Datenworte entspricht.

3. Datenschnittstelle nach Anspruch 2, **dadurch gekennzeichnet**, daß der Datenspeicher (4) von der Setz-/Rücksetzschaltung (7) in einen Zustand bringbar ist, in welchem die vom Eingang aus betrachtet erste Speicherzelle (25) logisch 1 und die übrigen Speicherzellen (25) logisch 0 oder umgekehrt sind.

4. Datenschnittstelle nach Anspruch 2 oder 3, **dadurch gekennzeichnet**, daß die vom Eingang aus betrachtet letzten Speicherzellen des Datenspeichers (4) Bestandteil der Vergleichsschaltung (5) sind, wobei die Vergleichsschaltung (5) außerdem eine Vergleichslogik (27) umfaßt, mit der einerseits die Ausgänge der letzten Speicherzellen und andererseits Ausgänge eines die Adresse der Peripherieschaltung (2) vorgebenden Bausteins verbunden sind.

5. Datenschnittstelle nach einem der Ansprüche 2 bis 4, **dadurch gekennzeichnet**, daß die Steuerschaltung (7) als Schieberegister mit mehreren Speicherzellen (28) ausgebildet ist, wobei die Speicherzellen (28) über logische Verknüpfungsglieder (29,30,31) untereinander verbunden sind, daß mit den Eingängen der logischen Verknüpfungsglieder (29,30,31) Ausgänge der Vergleichsschaltung (5) und der Setz-/Rücksetzschaltung (7) verbunden sind und daß an Ausgängen der Steuerschaltung (6) ein Speicherübergabesignal LATCH und ein Schreib/Lesesignal WRITE abgreifbar sind.

6. Datenschnittstelle nach Anspruch 5, **dadurch gekennzeichnet**, daß die Steuerschaltung (6) von der Setz-/Rücksetzschaltung (7) in einen Zustand bringbar ist, in welchem die vom Eingang aus betrachtet erste Speicherzelle (28) logisch 1 und die übrigen Speicherzellen (28) logisch 0 oder umgekehrt sind.

7. Datenschnittstelle nach Anspruch 5 oder 6, **dadurch gekennzeichnet**, daß der das Schreib/Lesesignal WRITE der Steuerschaltung (6) führende Ausgang mit einer Steuerlogik (29) der Vergleichsschaltung (5) verbunden ist, durch die die Speicherzellen (26) der Vergleichsschaltung (5) in der Schreibbetriebsart als Zähler umschaltbar sind und daß ein Zählerausgang mit einem der logischen Verknüpfungsglieder (29) zwischen den Speicherzellen (28) der Steuerschaltung (6) verbunden ist.

## Claims

1. Serial data interface (1) for the connection of a known data bus (3) to a peripheral circuit (2), wherein a plurality of peripheral circuits are connected to a corresponding plurality of data interfaces and the data bus includes a data lead (9), an enable lead (10) and a clock pulse lead (11), characterised by:
- a data store (4) connected to the data lead for the successive storage of data words of equal or different word lengths transmitted over the data lead;
- a comparison circuit (5), which detects addresses for peripheral circuits that are possibly present in the data words and compares them with the address of the currently connected peripheral circuit, connected to the data store;
- a control circuit, which compares the word lengths of the data words with a predefined word length and then, taking into account the signals transmitted on the enable lead, only allows a further transfer of the data words to the connected peripheral circuit if the two word lengths are equal, connected to the comparison circuit;
- an internal clock pulse generator (8), which supplies the data store (4), the comparison circuit (5) and the control circuit (6) with clock pulse signals, connected to the enable lead and to the clock pulse lead;
- an internal set/reset circuit (7) connected to the enable lead and to the clock pulse lead, whose outputs are connected to set and/or reset inputs of the data store (4), the comparison circuit (5) and the control circuit (6) and emits to these outputs corresponding set and/or reset commands which are generated either by an external reset signal or by means of a combination of signals transmitted on the enable lead and on the clock pulse lead.

2. Data interface in accordance with Claim 1, characterised in that, the data store (4) comprises a shift register having n storage cells (25) wherein the number n corresponds to the number of the bits of the data word associated with the peripheral circuit (2).

3. Data interface in accordance with Claim 2, characterised in that, the data store (4) can be placed by the set/reset circuit (7) into a state in which the first storage cell (25) as seen from the input is a logical 1 and the remaining storage cells (25) are logical 0 or vice versa.

4. Data interface in accordance with Claim 2 or 3, characterised in that, the last storage cells of the data store (4) as seen from the input are components of the comparison circuit (5), wherein the comparison circuit (5) also comprises a comparison logic (27) to which the outputs of the last storage cells on the one hand and outputs of a module containing the address of the peripheral circuit (2) on the other hand are connected.

5. Data interface in accordance with any of the Claims 2 to 4, characterised in that, the control circuit (7) is formed as a shift register having a plurality of storage cells (28), wherein the storage cells (28) are connected to each other via logical combinatorial elements (29, 30, 31), that outputs of the comparison circuit (5) and of the set/reset circuit (7) are connected to the inputs of the combinatorial logic elements (29, 30, 31) and that a store transfer signal LATCH and a write/read signal WRITE are derivable at outputs of the control circuit (6).

6. Data interface in accordance with Claim 5, characterised in that, the control circuit (6) is settable by the set/reset circuit (7) into a state in which the first storage cell (28) as seen from the input is a logical 1 and the remaining storage cells (28) are logical 0 or vice versa.

7. Data interface in accordance with Claim 5 or 6, characterised in that, the output carrying the write/read signal WRITE of the control circuit (6) is connected to a control logic (29) of the comparison circuit (5) by means of which the storage cells (26) of the comparison circuit (5) in the writing mode can be connected up as a counter and that a counter output is connected to one of the combinatorial logic elements (29) between the storage cells (28) of the control circuit (6).

## Revendications

1. Interface série pour données (1) pour la jonction d'un bus de données connu (3) à un circuit périphérique (2), une multitude de circuits périphériques étant raccordée à une multitude correspondante d'interfaces de données et le bus de données comprenant une ligne de données (9), une ligne de validation (10) et une ligne d'horloge (11), caractérisée par :
- une mémoire de données (4) raccordée à la ligne de données pour la mise en mémoire successive de mots contenant des données de même longueur ou de longueur différente transmis sur la ligne de données ;
- un circuit comparateur (5), raccordé à la mémoire de données, qui détecte les adresses pour les circuits périphériques qui existent éventuellement dans les mots contenant des données et qui les compare à l'adresse du circuit périphérique respectivement raccordé ;
- un circuit de commande (6) raccordé au circuit comparateur qui compare la longueur des mots contenant des données à une longueur de mots prédéterminée et qui, en tenant compte des signaux transmis sur la ligne de validation, ne permet une transmission des mots contenant des données au circuit périphérique raccordé que lorsque les deux longueurs de mots coïncident ;
- un générateur interne de cycle (8), raccordé à la ligne de validation et à la ligne d'horloge, qui fournit la mémoire de données (4), le circuit comparateur (5) et le circuit de commande (6) en signaux d'horloge ;
- un circuit de mise à un/mise à zéro interne (7), raccordé à la ligne de validation et à la ligne d'horloge, dont les sorties sont reliées à des entrées de mise à un et/ou de mise à zéro de la mémoire de données (4), du circuit comparateur (5) et du circuit de commande (6) et qui donne des ordres de mise à un et/ou de mise à zéro correspondants à ces sorties qui sont générés soit par un signal externe de mise à zéro, soit au moyen d'une combinaison de signaux transmis sur la ligne de validation et sur la ligne d'horloge.

2. Interface pour données selon la revendication 1, caractérisée en ce que la mémoire de données (4) comprend un registre à décalage avec n cellules de mémoire (25), le nombre n correspondant au nombre des bits des mots contenant des données affectés au circuit périphérique (2).

3. Interface pour données selon la revendication 2, caractérisée en ce que la mémoire de données (4) peut être amenée par le circuit de mise à un/mise à zéro (7) dans un état dans lequel la première cellule de mémoire (25), ceci étant vu à partir de l'entrée, est un 1 logique et les autres cellules de mémoire (25) 0 logique ou vice-versa.

4. Interface pour données selon la revendication 2 ou 3, caractérisée en ce que les dernières cellules de mémoire de la mémoire de données (4), ceci étant vu à partir de l'entrée, font partie du circuit comparateur (5), le circuit comparateur (5) comprenant en outre une logique comparatrice (27) à laquelle d'une part les sorties des dernières cellules de mémoire et, d'autre part, les sorties d'un élément qui donne l'adresse du circuit périphérique (2) sont reliées.

5. Interface pour données selon l'une des revendications 2 à 4, caractérisée en ce que le circuit de commande (7) est formé comme un registre à décalage avec plusieurs cellules de mémoire (28), les cellules de mémoire (28) étant reliées les unes aux autres par des éléments logiques (29, 30, 31), que des sorties du circuit comparateur (5) et du circuit de mise à un/mise à zéro (7) sont reliées aux entrées des éléments logiques (29, 30, 31) et qu'un signal de transfert de mémoire LATCH et un signal d'écriture/de lecture WRITE peuvent être prélévés aux sorties du circuit de commande (6).

6. Interface pour données selon la revendication 5, caractérisée en ce que le circuit de commande (6) peut être amené par le circuit de mise à un/mise à zéro (7) dans un état dans lequel la première cellule de mémoire (28), ceci étant vu à partir de l'entrée, est 1 logique et les autres cellules de mémoire (28) 0 logique ou vice-versa.

7. Interface pour données selon la revendication 5 ou 6, caractérisée en ce que la sortie qui guide le signal d'écriture/de lecture WRITE au circuit de commande (6) est reliée à une logique de commande (29) du circuit comparateur (5) par lequel les cellules de mémoire (26) du circuit comparateur (5) peuvent être commutées en mode d'écriture comme compteur et qu'une sortie de compteur est reliée à l'un des éléments logiques (29) entre les cellules de mémorie (28) du circuit de commande (6).
